# EUROPEAN PATENT SPECIFICATION

(11) **EP 3 273 500 B1**
(45) Date of publication and mention of the grant of the patent: **12.09.2018**
(21) Application number: 16180508.0
(22) Date of filing: 21.07.2016
(51) Int. Cl.: H01M 2/10, H01M 2/20, H01M 10/647, H01M 10/6556, H01M 10/6568, H01M 10/6566, H01M 10/613

(54) **BATTERY SYSTEM**
BATTERIESYSTEM
SYSTEME DE BATTERIE

(43) Date of publication of application: 24.01.2018
(73) Proprietor: Samsung SDI Co., Ltd., Giheung-gu Yongin-si, Gyeonggi-do 17084 (KR)
(72) Inventor: Stojanovic, Oliver, deceased (AT); Kovac, Damir, 8020 Graz (AT); Wünsche, Ralph, 8010 Graz (AT)
(74) Representative: Gulde & Partner

(56) References cited:
- US-A1- 2007 087 266
- US-A1- 2012 224 326
- US-A1- 2012 237 803

## Description

### Field of the Invention

The present invention relates to a battery system, comprising a plurality of battery modules that are supported by a plurality of crossbeams and comprise a plurality of battery submodules, each comprising a plurality of secondary battery cells.

### Technological Background

A rechargeable battery differs from a primary battery in that it can be repeatedly charged and discharged, while the latter makes only the irreversible conversion of chemical to electrical energy. Low-capacity rechargeable batteries are used as the power supply for small electronic devices, such as cellular phones, notebook computers and camcorders, while high-capacity rechargeable batteries are used as the power supply for engines in hybrid vehicles and the like.

In general, a rechargeable battery includes an electrode assembly including a positive electrode, a negative electrode, and a separator interposed between the positive and negative electrodes, a case receiving the electrode assembly, and an electrode terminal electrically connected to the electrode assembly. The case may have a cylindrical or rectangular shape depending on the intended purpose and the actual use of the rechargeable battery. An electrolyte solution is injected into the case for charging and discharging of the rechargeable battery through an electrochemical reaction of the positive electrode, the negative electrode, and the electrolyte solution.

Rechargeable batteries may be used as a battery module formed of a plurality of battery cells connected in series so as to be used for powering the engine of a hybrid vehicle that requires high energy density. That is, the battery module is formed by connecting an electrode terminal of each of the battery cells depending on the amount of power required, such that a high-power rechargeable battery can be realized.

In order to safely use these battery modules, heat generated from the rechargeable batteries should be efficiently emitted, discharged and/or dissipated. If there is insufficient heat emission/discharge/dissipation, a temperature deviation occurs between the respective battery cells, such that the battery module cannot generate the desired amount of power. In addition, when the internal temperature of the battery increases due to the heat generated from the rechargeable battery, abnormal reactions occurs therein and thus charging and discharging performance of the rechargeable battery deteriorates and the life-span of the rechargeable battery is shortened.

Thus, cooling devices for cooling the rechargeable battery modules by efficiently emitting/discharging/dissipating heat generated from the battery are well-known in the art. As a cooling device has to be brought into thermal contact with a surface of a battery module, it is usually constructed as separate device to be attached to a surface of the battery module or is integrated in a housing of the battery module.

In order to further increase the energy density of battery systems, e.g. in order to increase the driving range of electric vehicles, a plurality of battery modules can be stacked and electrically interconnected to form a battery pack. In order to ensure sufficient emission/discharge/dissipation of heat generated from the battery modules such multi-level battery packs may comprise a cooling device for each layer of the battery pack. This may lead to an increased height of the battery system and thus to an increased packaging space. The structure for distributing coolant to a plurality of battery modules is a usually weak point in terms of mechanical stability and tightness, either during normal use or in a crash situation. Depending on the type of secondary battery, e.g. a lithium ion battery, and the type of used coolant, e.g. water-based coolants, leaking coolant can severely damage the battery modules and even surrounding structures, e.g. an electrical vehicle. Particularly, all battery modules stacked with cooling devices may be destroyed if a single cooling device fails.

A battery system known from prior art is disclosed in the document US 2012/237803 A1.

### Summary of the Invention

One or more of the drawbacks of the prior art could be avoided or at least reduced by the present invention. In particular, a battery system is provided comprising:
- at least two battery submodules, each with at least two secondary battery cells electrically connected in series or in parallel, and each being mechanically self-supported by a module frame;
- a battery module with the at least two battery submodules electrically connected in series or in parallel and mechanically supported by a crossbeam; and
- a cell connection unit electrically connecting the at least two battery submodules, mechanically coupling the at least two module frames and mechanically coupling the battery module to the crossbeam;
- wherein the crossbeam comprises at least one coolant duct and is in thermal contact with a side surface of at least one battery submodule.

The battery system includes battery submodules consisting of a plurality of secondary battery cells that are preferably electrically connected in an *n*s*mp* configuration, i.e. with *n* cells connected in series and *m* cells connected in parallel. Thus, a battery submodule provides a voltage corresponding to the voltage of *n* cells and a current corresponding to the current of *m* cells. Preferably, *n* equals at least two, four, six, eight, ten or twelve and *m* equals at least one, two, three, four or five. Preferably, commercially available battery modules, e.g. with 12 battery cells, are used as battery submodules according to the present invention. Preferably each battery submodule is mechanically self-supporting and can be easily preassembled.

In the battery system, a plurality of such battery submodules is preferably electrically connected in series and/or in parallel in a *ksl*p configuration to form battery modules, i.e. with *k* battery submodules connected in series and/or *l* battery submodules connected in parallel. Thus, a battery module provides a voltage corresponding to the voltage of *k* battery submodules and a current corresponding to the current of *l* battery submodules. Preferably all battery submodules of a single battery module are connected in series and/or k equals an even number of at least two.

The battery system itself preferably consists of a plurality of battery modules that are electrically connected in series and/or in parallel in a *i*s*j*p configuration to form battery modules, i.e. with *i* battery modules connected in series and/or *j* battery modules connected in parallel. Thus, a battery system provides a voltage corresponding to the voltage of *i* battery modules and a current corresponding to the current of *j* battery modules. Preferably all battery modules mechanically coupled to a single crossbeam are connected in series or in parallel and battery modules mechanically coupled to different crossbeams are connected in series or in parallel.

According to the present invention, each battery module is mechanically coupled to a crossbeam and preferably the combination of battery module(s) and crossbeam is self-supporting. Each crossbeam further comprises a coolant duct, preferably an internal coolant duct, and each battery module is coupled to a crossbeam such that a side surface of a battery submodule of that battery module is in thermal contact with the crossbeam and the coolant duct. Preferably a side surface of the battery submodule is a surface of the battery submodule that encloses an angle of below 180°, preferably an acute or right angle with a surface of the battery submodule comprising electrical terminals. Thus, in the battery system, each battery submodule is cooled by a crossbeam via a side surface. Thus, coolant devices between adjacent layers of battery cells are omitted. The height of the battery system is reduced and a coolant leakage affects only a single cell layer.

Thus, with the battery system according to the present invention, a new hierarchic structure for a battery system is provided that comprises battery cells as the lowest hierarchical level, battery submodules as the next higher hierarchical level, followed by the next higher hierarchical level of battery modules that finally form the battery system. According to the present invention the battery submodules can be pre-assembled and are mechanically self-supporting. The battery modules can be pre-assembled from battery sub-modules and are cooled by the crossbeams. Thus, a variable modular system for a cooled battery system is provided with electric properties that can be fitted to actual demands and with mechanical properties that simplify the assembly of a battery system with improved mechanical stability.

According to an embodiment of the battery system each crossbeam supports a plurality of battery modules. Thus, a plurality of battery modules can be pre-assembled with a crossbeam and preferably the crossbeam mechanically supports the plurality of battery modules. Preferably, each battery module comprises an even number of battery submodules arranged symmetrically with respect to the crossbeam and also preferably battery modules adjacent in a longitudinal direction of the crossbeam contact each other or are sparsely separated only. Preferably, battery modules mechanically coupled to different crossbeams are electrically connected in series. Battery modules mechanically coupled to the same crossbeam may be electrically connected in series or in parallel and are preferably connected in series.

In a preferred embodiment of the battery system, in each battery module two submodules are arranged such that a distance between side surfaces of these battery submodules corresponds, preferably substantially equals, the width of the crossbeam. Thus, the crossbeam fits into the spacing between two side surfaces of battery submodules of a battery module. Preferably the crossbeam is disposed between the two battery submodules, contacts one side surface of each of the two battery submodules and is then mechanically coupled to the crossbeam.

Preferably, the battery system comprises a plurality of battery submodules, a plurality of battery modules and a plurality of crossbeams, wherein each battery module is mechanically coupled to a crossbeam and connected in series or in parallel to another battery module and wherein each battery submodule comprises at least one side surface in thermal contact with a crossbeam. With other words, the present invention relates to a battery system, comprising a plurality of battery submodules, each comprising n secondary battery cells connected in series and m secondary battery cells connected in parallel, a plurality of battery modules, each comprising k battery submodules connected in series and/or l battery submodules connected in parallel and a plurality of crossbeams, each comprising at least one coolant duct, wherein each battery module is mechanically coupled to at least one crossbeam and wherein battery modules coupled to different crossbeams are connected in series and/or in parallel. Each crossbeam is preferably mechanically coupled to at least two battery modules.

In a further preferred embodiment of the battery system a spacing between two of the plurality of crossbeams corresponds to the width of two battery submodules. Preferably, the battery submodules are arranged symmetrically with respect to the crossbeams. In this embodiment, each battery submodule preferably contacts only one crossbeam, e.g. via one side surface. Thus, the packaging density of battery cells in the battery system is further increased. Further preferred, each battery module comprises two battery submodules.

In a further preferred embodiment of the battery system each battery module comprises an even number of battery submodules and each crossbeam is disposed between two battery submodules, respectively. In this embodiment, each crossbeam passes between at least one pair of two battery submodules and is thus in thermal contact with the side surfaces of at least two battery submodules.

In an embodiment of the battery system, each battery submodule comprises a first side surface and a second side surface with smaller length than the first side surface and each battery submodule comprises one first side surface in thermal contact with a crossbeam. With other words, each battery submodule has a longitudinal direction that is aligned substantially parallel to a longitudinal direction of the crossbeam. Thus, the contact area and thus the thermal contact between battery submodules and the crossbeam are increased and submodule cooling is improved. Preferably, the height of the crossbeam is equal or bigger than the height of the first side surface of the battery submodules in thermal contact with the crossbeam. Thus, the contact area between a crossbeam and contacting battery submodule is maximized.

In a further preferred embodiment of the battery system the secondary battery cells have a planar shape, e.g. a prismatic or rectangular shape, and comprise a maximum extension in a direction substantially perpendicular to the length expansion of a contacting crossbeam. With other words, each battery submodule comprises at least one stack, preferably at least two stacks, of battery cells (each) with a stacking direction that is substantially parallel to the length expansion of the contacted crossbeam. In this way, the packaging density of battery cells in the battery system is further increased.

Each battery submodule preferably comprises a module frame that may be formed of interconnected side, top and front plates that are fixed to each other and/or to the stacked battery cells. The module frame provides mechanical stability to the advantageously self-supported battery submodule. The mechanical and electrical connection between battery submodules of a single battery module is preferably integrated in a single connection component. The connection component is preferably mechanically coupled to the module frame of each battery submodule and connects the electric terminals of the battery cell of the battery submodule. The connection component may further mechanically couple the battery module to a crossbeam. A plurality of battery submodules can be pre-assembled to the connection component. Each battery module comprises a connection component in form of a cell connection unit connected to at least two submodules and mechanically coupled to at least two module frames. The cell connection unit may comprise a substantially planar layer of insulating material with surface metallization forming electric contacts that connect groups of battery cell terminals and further decrease the height of the battery system. In a preferred embodiment of the battery system, one or more battery modules, preferably two battery modules, are connected to a single cell supervision circuit (CSC). The CSC monitors and controls the voltage and/or current of each battery cell of a battery submodule in order to balance the voltage and/or current of the individual battery cells in order to increase the lifespan of the battery cells. The CSC may comprise a plurality, e.g. two cell supervision chips, with each cell supervision chip comprising 12 measuring and control inputs/outputs.

The battery system according to the present invention preferably comprises a housing that comprises a frame and a ground plate. The frame may be formed of two longitudinal frame beams and two frame crossbeams and is mechanically connected, e.g. welded, to the ground plate. The crossbeams are mechanically coupled, e.g. screwed, to a first frame beam, i.e. a first longitudinal frame beam or a first frame crossbeam, and a second frame beam opposing the first frame beam. The crossbeams are preferably assembled with the housing after at least one battery module, preferably a plurality of battery modules, each comprising at least two battery submodules, was assembled with the crossbeam. With the battery system of the invention various sizes of frame beams, ground plates and crossbeams can be combined with pre-assembled battery modules in order to provide a modular system for a battery system with an internal cooling from the side surfaces of the battery submodules. Thus, a packaging size available e.g. in an electric vehicle, can be optimally used.

Preferably the first and the second frame beam, i.e. the frame beams mechanically coupled to the crossbeams, comprise coolant distributor lines that are fluidly connected to the (internal) coolant ducts of the crossbeams. Thus, a coolant feed line and a coolant return line for a battery system according to the invention is provided. The coolant distributor lines preferably comprise coolant ports, i.e. a coolant inlet and a coolant outlet, configured to be connected to a coolant piping outside the housing of the battery system.

According to another aspect of the present invention, a vehicle including a battery system as defined above is provided.

Further aspects of the present invention will be apparent from the dependent claims or the following detailed description.

### Brief Description of the Drawings

Features will become apparent to those of ordinary skill in the art by describing in detail exemplary embodiments with reference to the attached drawings in which:
- Fig. 1: illustrates a perspective view of a battery submodule according to an embodiment.
- Fig. 2: illustrates an exploded view of a battery submodule according to an embodiment.
- Fig. 3: illustrates a perspective view of a battery module according to an embodiment.
- Fig. 4: illustrates a schematic top view of a battery module according to an embodiment.
- Fig. 5: illustrates a perspective view of a three battery modules mechanically coupled to a crossbeam according to an embodiment.
- Fig. 6: illustrates a detailed view of a one battery module mechanically coupled to a crossbeam according to an embodiment.
- Fig. 7: illustrates a perspective view of a plurality of crossbeams mounted to a housing according to an embodiment.
- Fig. 8: illustrates a perspective view of a coolant circuit according to an embodiment.
- Fig. 9: illustrates a perspective view of a battery system according to an embodiment.
- Fig. 10: illustrates a schematic top view of a battery system according to an embodiment.

### Detailed Description of the Invention

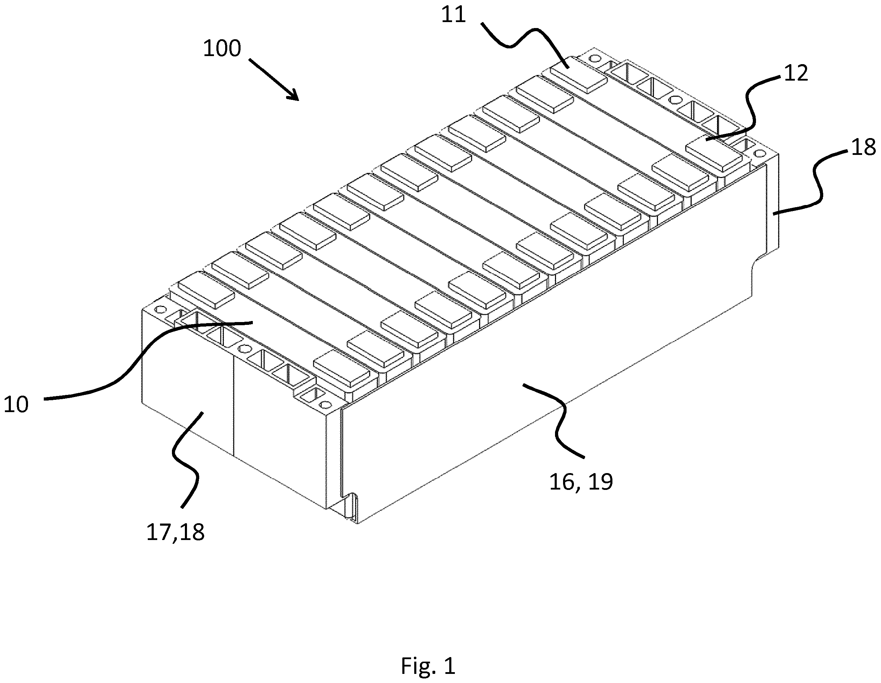

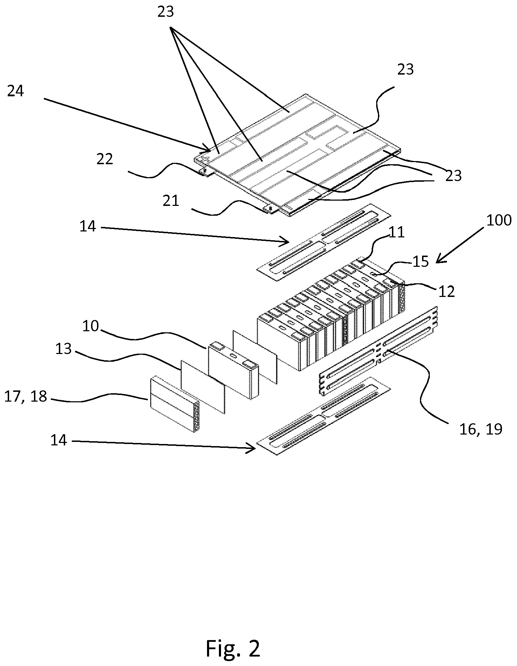

Referring to Fig. 1, an exemplary embodiment of a battery submodule 100 includes a plurality of aligned secondary battery cells 10 with substantially planar shape. A pair of module front plates 18 is provided to face front surfaces of the battery cells 10. The module front plates 18 are mechanically coupled to a pair of module side plates 19 facing side surfaces of the battery cells 10. Thereby the plurality of battery cells 10 is fixed together. The battery submodule comprises a first side surface 16, corresponding to the module side plates 19, and a second side surface 17, corresponding to the module front plates 18, with shorter length than the first side surface 16. Referring to Fig. 2, the battery submodule 100 according to an embodiment further comprises a pair of module top plates 14 that are mechanically coupled to the module front and side plates 18, 19. The module front plates 18, the module side plates 19 and the module top plates 14 constitute a self-supporting body of the battery submodule 100.

As shown in Figs. 1, 2 each battery cell 10 is a prismatic (or rectangular) cell, the wide flat surfaces of the cells being stacked together to form the battery submodule 100. Further, each battery cell 10 includes a battery case configured for accommodation of an electrode assembly and an electrolyte. The battery case is hermetically sealed and is provided with negative and positive electrode terminals 11 and 12 having different polarities, and a vent 15. The vent 15 is a safety means of the battery cell 10, which acts as a passage through which gas generated in the battery cell 10 is exhausted to the outside of the battery cell 10. In order to avoid any unwanted electric contact between the individual battery cells 10 isolation foils 13 are disposed between adjacent battery cells 10.

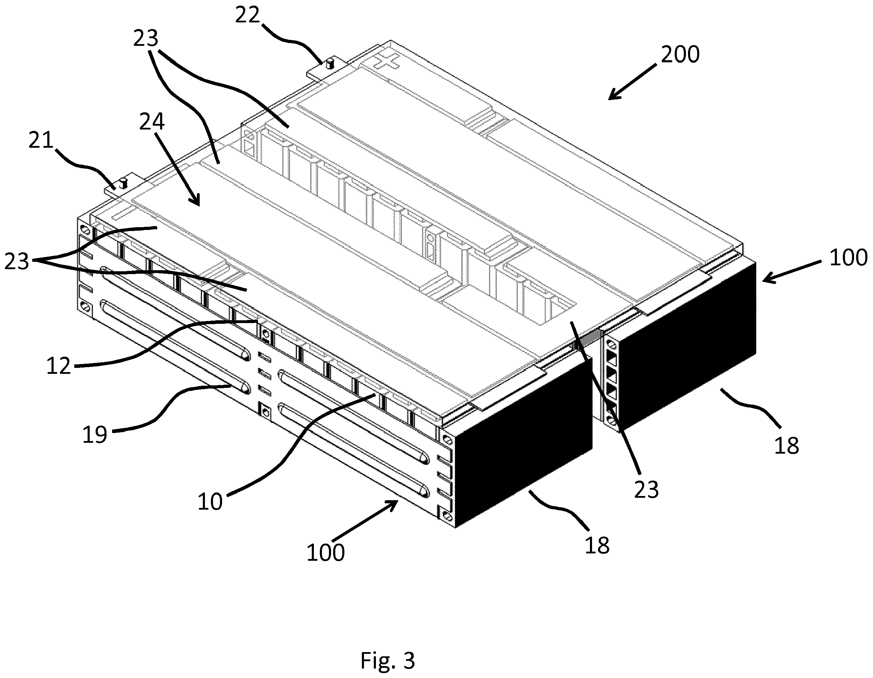

As further shown in Fig. 2, the battery cells 10 are electrically connected using a cell connection unit 24 that constitutes a part of a battery module 200 according to an embodiment and shown in detail in Fig. 3. The cell connection unit 24 (CCU) is mechanically coupled to the module top and side plates 14, 19 of two battery submodules 100 and comprises a negative and positive module terminal 21, 22 and a copper metallization that forms a plurality of conducting elements 23. The conducting elements 23 are spaced apart from each other and thus electric contact between two conducting elements 23 can only be achieved via a battery cell 10. The conducting elements 23 are connected to negative or positive terminals 11, 12 of secondary battery cells 10 and connect at once four battery cells 10 of each battery submodule 100 in parallel and connect the thus formed bundles of four battery cells 10 in series. By connecting a bundle of four battery cells 10 of a first battery submodule 100 with a bundle of four battery cells 10 of a second battery submodule 100, the cell connection unit 24 thus connects two battery submodules 100 in series.

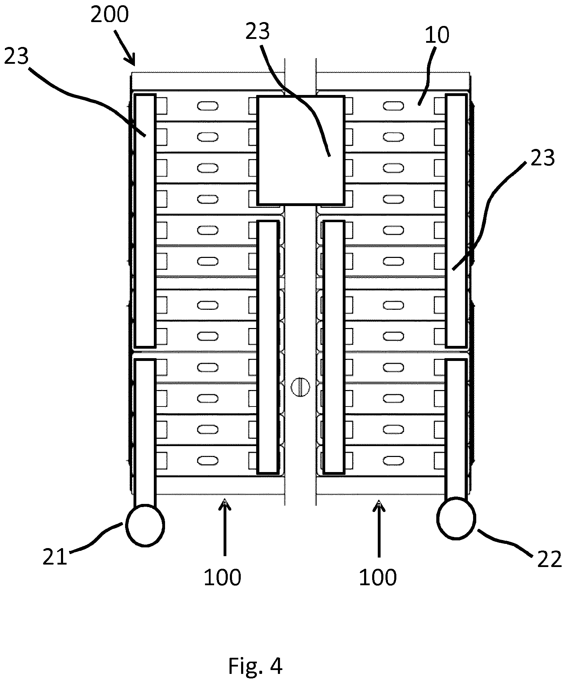

Referring to Figs. 3 and 4, a battery module 200 comprises two battery submodules 100 with a 4p3s configuration, i.e. with four battery cells 10 connected in parallel and three battery cell bundles connected in series. Thus, the resulting battery module comprises a 4p6s configuration. The so-formed battery module 200 may be used as power source with the added voltage of six battery cells 10 and the added current of four battery cells 10. The electrical power of a battery module 200 is thus twenty four times the power of a single battery cell 10. With each battery cell 10 providing a voltage of approximately 3.648 V the battery module 200 provides a voltage of approximately 21.89 V. Although the battery module 200 shown in Fig. 4 comprises the module terminals 21, 22 at opposing side surfaces of the battery module 200, these terminals 21, 22 can also be disposed on a single front surface of the battery module 200 as shown in Fig. 3.

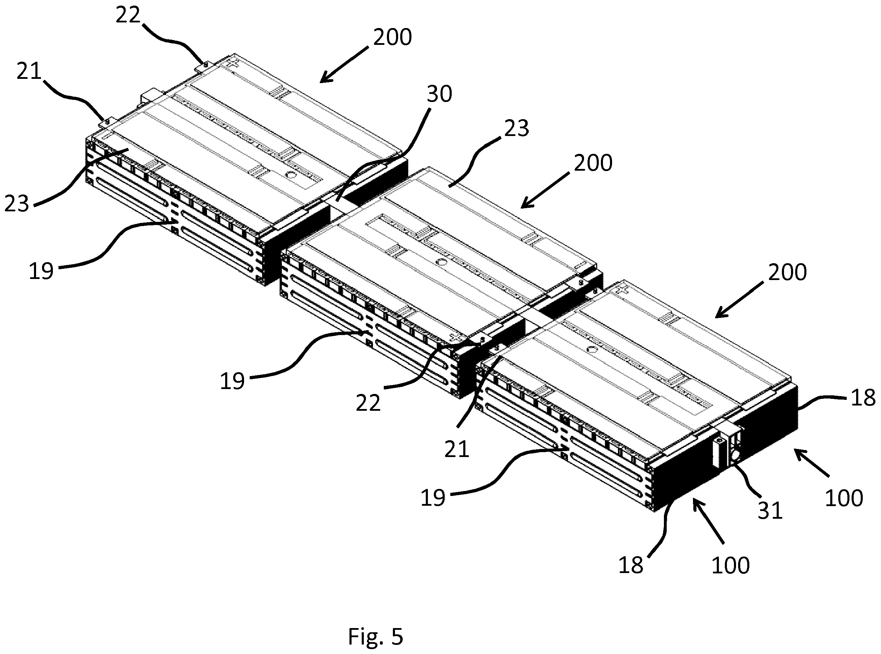

According to an embodiment shown in Fig. 5, three battery modules 200 are mechanically coupled to one crossbeam 30. Thereby, two battery submodules 100 are electrically connected to each other via a cell connection unit 24 at their top sides shown in Fig. 3. The crossbeam 30 is inserted into a space between the battery submodules 100 from the bottom side of the battery module 200 and mechanically coupled to each of the battery modules 100. Thereby each of the battery submodules 100 is mechanically supported by the crossbeam 30. The mechanical coupling between battery modules 200 and crossbeam 30 is achieved using fixing means attached to the bottom sides of the battery modules 200 and the crossbeam 30 and by attachment means of the crossbeam 30 inserted into corresponding features of the CCU 24

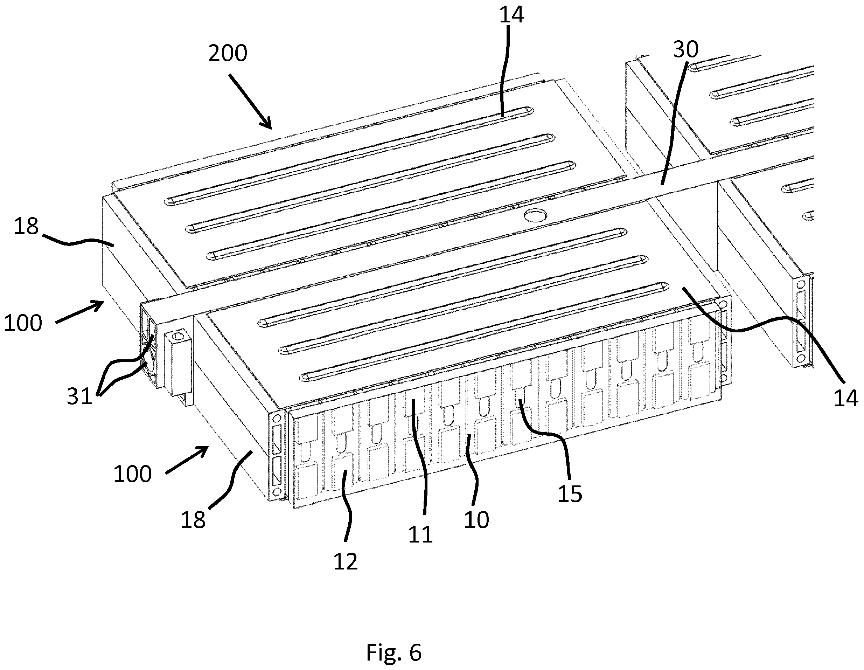

As shown in the detailed view of Fig. 6, the crossbeam 30 comprises two coolant ducts 31 that pass through the entire length of the crossbeam 30. The coolant ducts 31 are formed of steel pipes welded in the matrix of the extruded aluminum crossbeam 30. Alternatively, the coolant ducts 31 are formed by encapsulated piping lines inserted into a suitable cavity of crossbeam 30. Further, each of the battery submodules 100 comprises at least one first side surface and a second side surface 17, corresponding to a module front plate 18, with smaller length than the at least one first side surface. As shown in Fig. 6, the height of the first side surface equals the height of the crossbeam 30 such that a whole first side surface of each battery submodule 100 is in thermal contact with the crossbeam 30. As shown in Fig. 6, the first side surface that is in contact with the crossbeam 30 is opposite another first side surface that comprises the negative and positive terminals 11, 12 of the battery cells 10. Alternatively, the crossbeam 30 is in contact with a first side surface 16 that is perpendicular to a top surface comprising the negative and positive terminals 11, 12 of the battery cells 10, as shown in Figs. 1, 5. As shown in Fig. 5, the crossbeam 30 then comprises at least the same height as the first side surface 16 and has a longitudinal direction that is substantially parallel to the length orientation of the module plates 19.

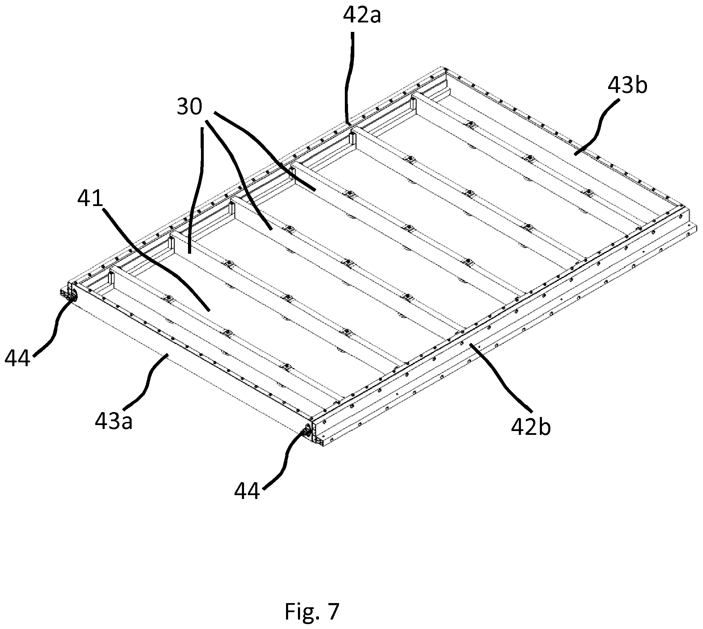

According to the embodiment shown in Fig. 7, the crossbeams 30 are mechanically coupled to a housing for a battery system (not shown). The housing comprises an aluminum ground plate 41 that is welded to a frame, comprising two longitudinal extruded aluminum frame beams 42 and two extruded aluminum frame crossbeams 43. A first longitudinal frame beam 42a faces a second longitudinal frame beam 42b and a first frame crossbeam 43a faces a second frame crossbeam 43b and thus the frame beams constitute a rectangular frame. Crossbeams 30 are mounted into the frame using screws and snap fit attaching means. In praxis, before being mounted into the housing the crossbeams 30 are coupled to a plurality of battery modules 200 that however are omitted in the illustration. Between the crossbeams 30 spaces are formed, wherein battery submodules (not shown) are to be inserted.

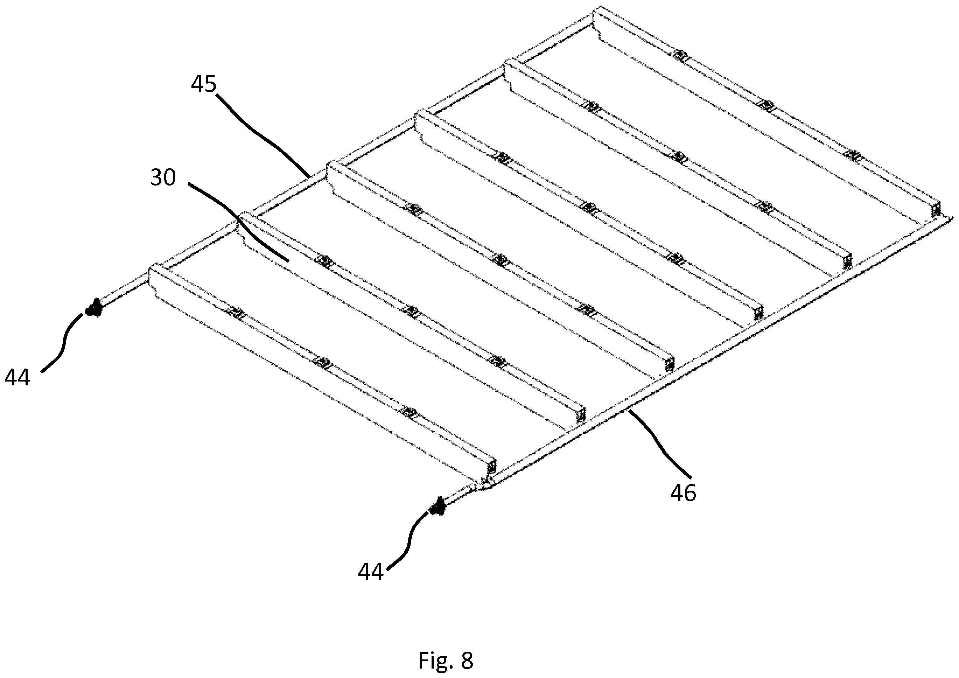

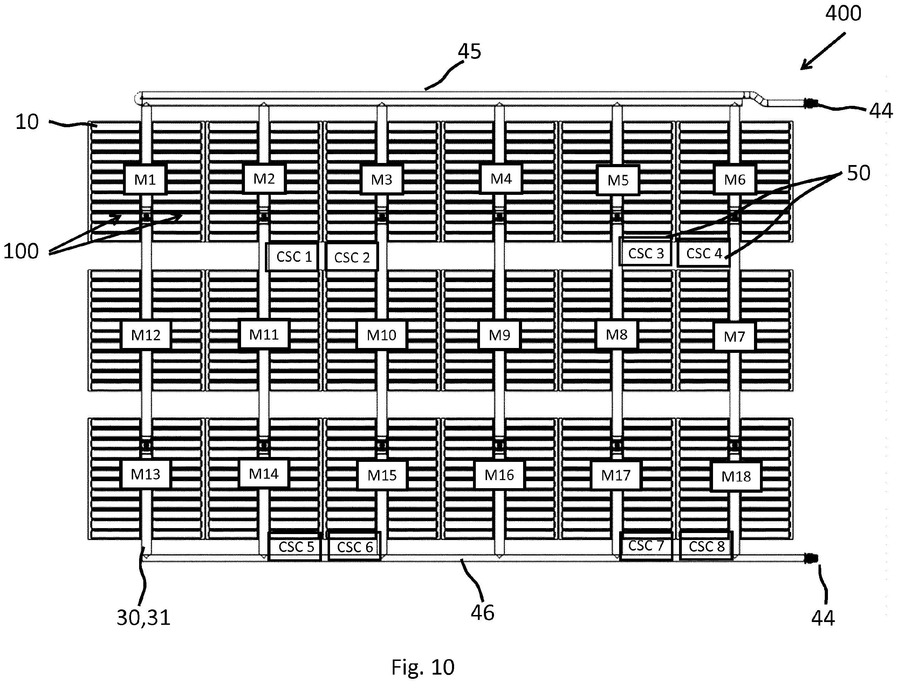

As shown in Fig. 8 and 10, the first longitudinal frame beam 42a comprises an internal coolant feed line 45 and the second longitudinal frame beam 42b comprises an internal coolant return line 46. As shown in Figs. 7 to 10 the coolant return and feed line 45, 46 each comprise a coolant port 44 for connecting to a coolant piping (not shown) external to the housing. The crossbeams 30 comprise internal coolant ducts 31 and are mechanically coupled to the longitudinal frame beams 42 such that the coolant ducts 31 are fluidly connected with the coolant feed and return line 45, 46.

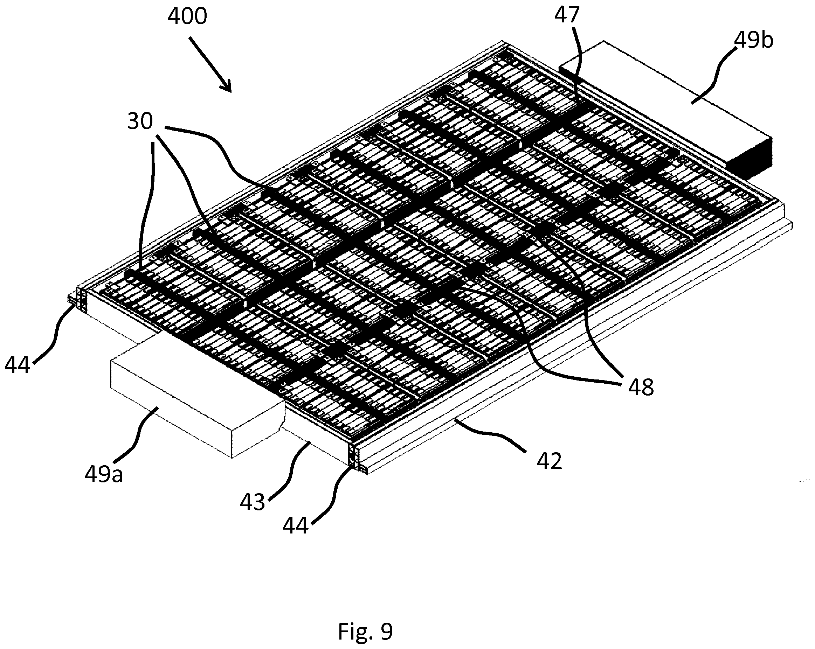

Fig. 9 shows a battery system 400 according to an embodiment comprising the housing as shown in Figs. 7, 8 and that comprises six crossbeams 30 with three battery modules 200 attached to each crossbeam 30, as shown in Fig. 5. Thus, in the spaces on both sides of the crossbeams 30 battery submodules 100 according to Figs. 1 and 2 are disposed such that a first side surface 16 of each battery submodule 100 is in direct and thus in thermal contact with a side surface of one crossbeam 30, respectively. Thus, a coolant distributed to the crossbeams 30 via the coolant ports 44 and the longitudinal frame beams 42 absorbs the heat emitted by the battery cells 10 of the battery submodules 100. By cooling the battery cells 10 via a side surface of each battery submodule, cooling means in the ground plate 42 can be omitted and thus the height of the battery system can be decreased, e.g. to around 100 mm.

Within the battery submodules 100 placed in the housing according to Figs. 9, 10, battery cells 10 are connected as shown in Figs. 3, 4 and negative and positive ports 21, 22 of a first and second row of battery modules M1 to M12 are electrically connected to busbar 47 and a port of first battery submodule M1 is electrically connected to a first E/E box 49a. A corresponding first battery submodule M12 of the second row of battery modules 200 is electrically connected to a corresponding first battery submodule M13 of the third row of battery modules 200. The battery modules M14 to M18 in the third row of battery modules 200 are electrically connected to each other via conductor rail elements 48 and a battery submodule M18 of the third row of battery modules 200 is electrically connected to a second E/E box 49b.

Thus, in the battery system 400 shown in Fig. 9, 10, eighteen battery modules 200 are connected in series, with each battery module 200 comprising two battery submodules 100, each with a 4p3s configuration, that are connected in series. Thus, between the first and second E/E box 49a and 49b, four battery cells 10 are connected in parallel and 18*2*12=432 battery cells 10 are connected in series. With each battery module 200 comprising a voltage of approximately 21.89 V the battery system 400 comprises a voltage of approximately 394 V.

For controlling voltage and current of the battery system 400, the first and/or second E/E box 49 may comprise a battery management unit (BMU), an high voltage connector, an input and/or fuse, a relay, a current sensor, an electromagnetic compatibility filter (EMC-Filter), a precharge relay and/or resistor and/or an HV interface. The battery system 400 further comprises eight cell supervision circuits (CSC) 50 for current measurement and control of the individual battery cells 10, in particular for balancing voltage and/or current of the battery cells 10 of the battery system 400. Each CSC 50 comprises two CSC chips (not shown), each comprising twelve measuring and control inputs. Thus, one CSC 50 for two battery modules 200 or forty-eight battery cells 10 is sufficient.

### Reference signs

- 10: secondary battery cell
- 11: negative electrode terminal
- 12: positive electrode terminal
- 13: isolation foil
- 14: module top plate
- 15: vent hole
- 16: first side surface
- 17: second side surface
- 18: module front plate
- 19: module side plate
- 100: battery submodule

- 21: negative module terminal
- 22: positive module terminal
- 23: conducting element
- 24: cell connection unit
- 200: battery module

- 30: crossbeam
- 31: coolant duct

- 41: ground plate
- 42: longitudinal frame beam
- 43: frame crossbeam
- 44: coolant port
- 45: coolant feed line
- 46: coolant support line
- 47: busbar
- 48: conductor rail
- 49: E/E box

- 50: cell supervision circuit

## Claims

1. A battery system (400), comprising:
- at least two battery submodules (100), each with at least two secondary battery cells (10) electrically connected in series or in parallel, and each being mechanically self-supported by a module frame;
- a battery module (200) with the at least two battery submodules (100) electrically connected in series or in parallel and mechanically supported by a crossbeam (30); and
- a cell connection unit (24) electrically connecting the at least two battery submodules (100), mechanically coupling the at least two module frames (14,18,19) and mechanically coupling the battery module (200) to the crossbeam (30);
- wherein the crossbeam (30) comprises at least one coolant duct (31) and is in thermal contact with a side surface (16, 17) of at least one battery submodule (100).

2. The battery system (400) according to claim 1,
- wherein side surfaces (16, 17) of two battery submodules (100) of a battery module (200) are arranged with a distance corresponding to the width of the crossbeam (30); and
- wherein the crossbeam (30) is disposed between the two battery submodules (100) and contacts one side surface (16, 17) of each of the two battery submodules (100).

3. The battery system (400) according to claim 1 or 2, comprising a plurality of battery modules (200) and a plurality of crossbeams (30),
- wherein each crossbeam (30) is mechanically coupled to at least two battery modules (200); and
- wherein the plurality of battery modules (200) is connected in series and/or in parallel.

4. The battery system (400) according to claim 3, wherein a spacing between two crossbeams (30) corresponds to the width of two battery submodules (100).

5. The battery system (400) according to one of the preceding claims, wherein each battery submodule (100) comprises a first side surface (16) and a second side surface (17) with shorter length than the first side surface (16), and wherein each battery submodule (100) comprises one first side surface (16) in thermal contact with a crossbeam (30).

6. The battery system (400) according to one of the preceding claims, wherein the secondary battery cells (10) have a planar shape and comprise a maximum extension in a direction substantially perpendicular to a longitudinal direction of a crossbeam (30).

7. The battery system (400) according to one of the preceding claims, wherein two battery modules (200) are connected to one cell supervision circuit (50), respectively.

8. The battery system (400) according to one of the preceding claims, further comprising a housing with a frame (42,43), comprising two longitudinal frame beams (42) and two frame crossbeams (43), and a ground plate (41) mechanically connected to the frame (42,43), wherein the crossbeams (30) are mechanically coupled to a first frame beam (42a,43a) and a second frame beam (42b,43b) opposite the first frame beam (42a,43a).

9. The battery system (400) according to claim 9, wherein coolant distributor lines (45,46) are integrated in the first frame beam (42a) and in the second frame beam (42b) and fluidly connected to the coolant ducts (31).

## Patentansprüche

1. Ein Batteriesystem (400), aufweisend:
- zumindest zwei Batteriesubmodule (100), wobei jedes zumindest zwei Sekundärbatteriezellen (10), die elektrisch in Reihe oder parallel geschaltet sind, aufweist und wobei jedes von einem Modulrahmen mechanisch selbst abgestützt ist;
- ein Batteriemodul (200) mit den zumindest zwei Batteriesubmodulen (100), die elektrisch in Reihe oder parallel geschaltet sind und von einem Querträger (30) mechanisch abgestützt werden; und
- eine Zellverbindungseinheit (24), die die zumindest zwei Batteriesubmodule (100) elektrisch verbindet, die zumindest zwei Modulrahmen (14, 18, 19) mechanisch koppelt und das Batteriemodul (200) mit dem Querträger (30) mechanisch verkoppelt;
- wobei der Querträger (30) zumindest einen Kühlmittelkanal (31) aufweist und mit einer Seitenfläche (16, 17) zumindest eines Batteriesubmoduls (100) in thermischem Kontakt steht.

2. Das Batteriesystem (400) nach Anspruch 1,
- wobei Seitenflächen (16, 17) von zwei Batteriesubmodulen (100) eines Batteriemoduls (200) mit einem Abstand, der der Breite des Querträgers (30) entspricht, angeordnet sind; und
- wobei der Querträger (30) zwischen den zwei Batteriesubmodulen (100) angeordnet ist und mit einer Seitenfläche (16, 17) jedes der zwei Batteriesubmodule (100) in Kontakt steht.

3. Das Batteriesystem (400) nach Anspruch 1 oder 2, aufweisend eine Vielzahl von Batteriemodulen (200) und eine Vielzahl von Querträgern (30),
- wobei jeder Querträger (30) mit zumindest zwei Batteriemodulen (200) mechanisch verkoppelt ist; und
- wobei die Vielzahl der Batteriemodule (200) in Reihe und/oder parallel geschaltet ist.

4. Das Batteriesystem (400) nach Anspruch 3, wobei ein Abstand zwischen zwei Querträgern (30) der Breite von zwei Batteriesubmodulen (100) entspricht.

5. Das Batteriesystem (400) nach einem der vorhergehenden Ansprüche, wobei jedes Batteriesubmodul (100) eine erste Seitenfläche (16) und eine zweite Seitenfläche (17) mit einer kürzeren Länge als die erste Seitenfläche (16) aufweist, und wobei jedes Batteriesubmodul (100) eine erste Seitenfläche (16), die in thermischem Kontakt mit einem Querträger (30) steht, aufweist.

6. Das Batteriesystem (400) nach einem der vorhergehenden Ansprüche, wobei die Sekundärbatteriezellen (10) eine planare Form aufweisen und eine maximale Erstreckung in einer Richtung, die im Wesentlichen perpendikulär zu einer Längsrichtung eines Querträgers (30) ist, aufweisen.

7. Das Batteriesystem (400) nach einem der vorhergehenden Ansprüche, wobei zwei Batteriemodule (200) jeweils mit einer Zellüberwachungsschaltung (50) verbunden sind.

8. Das Batteriesystem (400) nach einem der vorhergehenden Ansprüche, ferner aufweisend ein Gehäuse mit einem Rahmen (42, 43), der zwei Rahmenlängsträger (42) und zwei Rahmenquerträger (43) aufweist, und einer Grundplatte (41), die mit dem Rahmen (42, 43) mechanisch verkoppelt ist, wobei die Querträger (30) mit einem ersten Rahmenträger (42a, 43a) und einem zweiten Rahmenträger (42b, 43b), der dem ersten Rahmenträger (42a, 43a) gegenüberliegt, mechanisch verkoppelt sind.

9. Das Batteriesystem (400) nach Anspruch 9, wobei Kühlmittelverteilerleitungen (45, 46) in den ersten Rahmenträger (42a) und in den zweiten Rahmenträger (42b) integriert und mit den Kühlmittelkanälen (31) fluidisch verbunden sind.

## Revendications

1. Système de batterie (400) comprenant :
- au moins deux sous-modules de batterie (100), dotés chacun d'au moins deux piles rechargeables (10) électriquement connectées en série ou en parallèle, et étant mécaniquement autoportés chacun grâce à un cadre de module ;
- un module de batterie (200) doté des au moins deux sous-modules de batterie (100) électriquement connectés en série ou en parallèle et mécaniquement supportés par une entretoise (30) ; et
- une unité de connexion de piles (24) connectant électriquement les au moins deux sous-modules de batterie (100), accouplant mécaniquement les au moins deux cadres de module (14, 18, 19) et accouplant mécaniquement le module de batterie (200) à l'entretoise (30) ;
- dans lequel l'entretoise (30) comprend au moins un conduit de fluide de refroidissement (31) et est au contact thermique d'une surface latérale (16, 17) d'au moins un sous-module de batterie (100).

2. Système de batterie (400) selon la revendication 1,
dans lequel les surfaces latérales (16, 17) de deux sous-modules de batterie (100) d'un module de batterie (200) sont placées à une distance correspondant à la largeur de l'entretoise (30) ; et
dans lequel l'entretoise (30) est disposée entre les deux sous-modules de batterie (100) et est au contact d'une surface latérale (16, 17) de chacun des deux sous-modules de batterie (100).

3. Système de batterie (400) selon la revendication 1 ou 2, comprenant une pluralité de modules de batterie (200) et une pluralité d'entretoises (30),
- dans lequel chaque entretoise (30) est mécaniquement accouplée à au moins deux modules de batterie (200) ; et
- dans lequel la pluralité de modules de batterie (200) est connectée en série et/ou en parallèle.

4. Système de batterie (400) selon la revendication 3, dans lequel un écartement entre deux entretoises (30) correspond à la largeur de deux sous-modules de batterie (100) .

5. Système de batterie (400) selon l'une des revendications précédentes, dans lequel chaque sous-module de batterie (100) comprend une première surface latérale (16) et une seconde surface latérale (17) d'une longueur plus courte que la première surface latérale (16), et dans lequel chaque sous-module de batterie (100) comprend une première surface latérale (16) au contact thermique d'une entretoise (30).

6. Système de batterie (400) selon l'une des revendications précédentes, dans lequel les piles rechargeables (10) sont de forme plane et présentent une étendue maximale dans une direction sensiblement perpendiculaire à une direction longitudinale d'entretoise (30) .

7. Système de batterie (400) selon l'une des revendications précédentes, dans lequel les deux modules de batterie (200) sont connectés à un circuit de surveillance de piles (50), respectivement.

8. Système de batterie (400) selon l'une des revendications précédentes, comprenant en outre un logement pourvu d'un cadre (42, 43), comprenant deux longerons longitudinaux de cadre (42) et deux entretoises de cadre (43), et une plaque de base (41) mécaniquement reliée au cadre (42, 43), dans lequel les entretoises (30) sont mécaniquement accouplées à un premier longeron de cadre (42a, 43a) et à un second longeron de cadre (42b, 43b) en regard du premier longeron de cadre (42a, 43a).

9. Système de batterie (400) selon la revendication 9, dans lequel des conduites de distribution de fluide de refroidissement (45, 46) sont intégrées dans le premier longeron de cadre (42a) et dans le second longeron de cadre (42b) et sont en communication fluidique avec les conduits de fluide de refroidissement (31).
